# EUROPEAN PATENT APPLICATION

(11) **EP 2 801 908 A1**
(43) Date of publication of application: **12.11.2014**
(21) Application number: 12864123.0
(22) Date of filing: 11.09.2012
(51) Int. Cl.: G06F 11/34

(54) **NODE DEVICE AND NETWORK SYSTEM**

(30) Priority: 06.01.2012 JP 2012001200
(71) Applicant: Omron Corporation, Kyoto-shi, Kyoto 600-8530 (JP)
(72) Inventor: AKAHOSHI, Yusuke, Kyoto-shi Kyoto 600-8530 (JP); MAEDA, Satoru, Kyoto-shi Kyoto 600-8530 (JP)
(74) Representative: Kilian Kilian & Partner
(86) International application number: PCT/JP2012/073159
(87) International publication number: WO 2013/103033

(57) **Abstract**

Node device (21) according to the present invention includes log-information storage unit (45) in which log information on node device (21) is stored and control unit (41) that performs processing of producing the log information during operation to store the log information in log-information storage unit (45). Node device (21) also includes first sending and receiving unit (90) that receives data from an outside of node device (21) and sends data to the outside of node device (21). Node device (21) also includes log processing unit (50). Log processing unit (50) receives the data from the outside of node device (21) through first sending and receiving unit (90), and performs processing of reading the log information from log-information storage unit (45) to cause first sending and receiving unit (90) to send the log information irrespective of control unit (41) when the received data includes a log request command expressing a request for the log information.

## Description

### TECHNICAL FIELD

The present invention relates to a node device, more particularly to a node device provided on a network.

The invention also relates to a network system including the node device.

### BACKGROUND ART

Conventionally, for example, a POS (Point Of Sales) terminal described in Patent Document 1 (Japanese Unexamined Patent Publication No. 2000-207250) is well known as this kind of node device. In the example of Patent Document 1, a store computer is communicably connected to four POS terminals through a network, and a maintenance base computer is communicably connected to the POS terminals.

### PRIOR ART DOCUMENTS

### PATENT DOCUMENTS

Patent Document 1: Japanese Unexamined Patent Publication No. 2000-207250

### SUMMARY OF THE INVENTION

### PROBLEMS TO BE SOLVED BY THE INVENTION

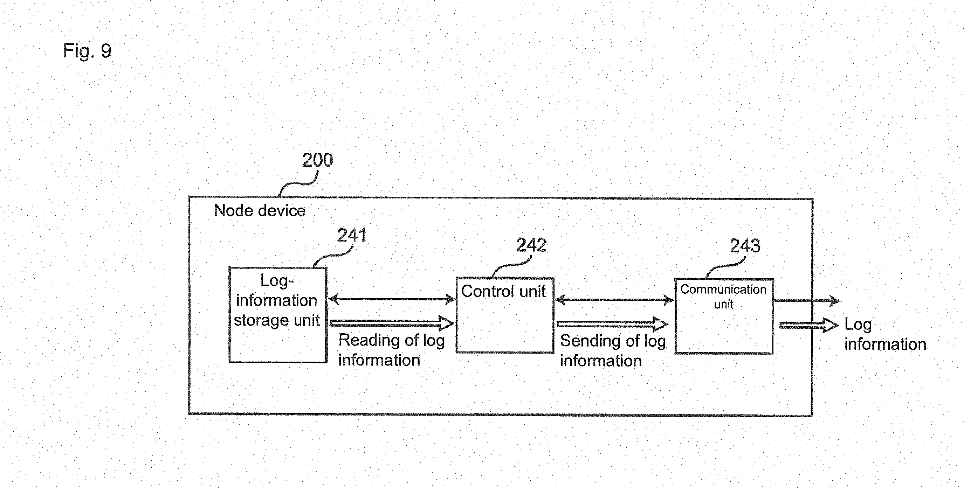

Generally, as illustrated in Fig. 9, node device 200 such as the POS terminal includes communication unit (for example, LAN interface) 243 that sends and receives data through the network, control unit 242 including a CPU (Central Processing Unit) that performs various pieces of processing, and log-information storage unit (such as a flash memory and an EEPROM (Electrically Erasable Programmable Read-Only Memory)) 241 in which log information on the node device is stored. During the performance of various pieces of processing, control unit 242 produces the log information in which a history such as a processing content and a warning is fully recorded, and stores the log information in log-information storage unit 241. When some sort of failure is generated in node device 200, control unit 242 reads the log information from log-information storage unit 242 upon request from an outside (in the example, the maintenance base computer) of node device 200, and sends the log information to the outside through communication unit 243.

However, in conventional node device 200, because the reading of the log information and the sending of the log information through communication unit 243 are performed by the action of control unit 242, unfortunately the log information cannot be acquired outside node device 200, particularly in a remote location away from node device 200 in case of trouble with control unit 242. For example, in order to acquire the log information, actually broken node device 200 is taken apart to take out log-information storage unit 241 (or to change wiring), log-information storage unit 241 is connected to another computer to read the log information. Therefore, it takes a huge amount of time and effort.

A problem of the present invention is to provide a node device that can acquire the log information in the remote location even if the trouble is generated in the control unit included in the node device.

Another problem of the present invention is to provide a network system including the node device.

### MEANS FOR SOLVING THE PROBLEM

In accordance with one aspect of the present invention, a node device provided on a network includes: a log-information storage unit in which log information on the node device is stored; a control unit configured to perform processing of producing the log information during operation to store the log information in the log-information storage unit; a first sending and receiving unit configured to receive data from an outside of the node device and to send data to the outside of the node device; and a log processing unit configured to receive the data from the outside of the node device through the first sending and receiving unit and to perform processing of reading the log information from the log-information storage unit to cause the first sending and receiving unit to send the log information irrespective of the control unit when the received data includes a log request command expressing a request for the log information.

As used herein, the term "network" widely means networks such as a Local Area Network (LAN), a Wide Area Network (WAN), and the Internet irrespective of a wired or wireless manner.

In the node device, during the operation, the control unit performs the processing of producing the log information on the node device to store the log information in the log-information storage unit. When some sort of failure is generated in the node device, the log processing unit receives the data from the outside of the node device, for example, the computer device in the remote location through the first sending and receiving unit. The log processing unit performs the processing of reading the log information from the log-information storage unit to cause the first sending and receiving unit to send the log information irrespective of the control unit when the received data includes the log request command expressing the request for the log information. Accordingly, even if a trouble is generated in the control unit, the log information can be acquired in the remote location away from the node device without taking apart node device.

The log processing unit can be constructed only with the hardware with no use of the CPU or software because the processing to be performed is limited to the processing related to the log information. A possibility of generating the trouble in the log processing unit can be decreased in the case that the log processing unit is constructed only with the hardware. Accordingly, the log information can surely be acquired in the remote location away from node device.

As used herein, the term "failure" means some sort of abnormality such as a trouble with the whole node device or a component (for example, control unit) of the node device, disconnection of a communication line to the node device, run out of battery, and an unreachable radio wave.

The term "computer device" widely means computers that can conduct communication through the network irrespective of names such as a client device, a server device, and a host computer.

The term "only with hardware" means that the processor, such as the CPU, which is used to read software (computer program) from a storage medium, is not included. For example, the log processing unit that can be constructed only with the hardware includes integrated circuits such as a PLD (Programmable Logic Device) and a CPLD (Complex Programmable Logic Device).

In the node device, preferably the log processing unit permits the control unit to perform processing of communicating with the outside through the first sending and receiving unit when the received data does not include the log request command.

In the node device, the log processing unit permits the control unit to perform the processing of communicating with the outside through the first sending and receiving unit when the received data does not include the log request command. Accordingly, control unit 41 can communicate with the outside of the node device, for example, the computer device on the network through the first sending and receiving unit.

In the node device, preferably the log processing unit includes: a log request command retaining unit configured to retain data expressing a predetermined log request command; and a log request command detecting unit configured to detect whether the data received through the first sending and receiving unit includes the log request command by comparing the received data with data expressing the log request command retained by the log request command retaining unit.

In the node device, the log request command retaining unit retains the data expressing the predetermined log request command. The log request command detecting unit detects whether the data received through the first sending and receiving unit includes the log request command by comparing the received data with the data expressing the log request command retained by the log request command retaining unit. Accordingly, the log processing unit can surely detect whether the received data includes the log request command. The log request command retaining unit and the log request command detecting unit can be constructed only with the hardware with no use of the CPU or the software. A possibility of generating the trouble in the log processing unit can further be decreased in the case that the log processing unit is constructed only with the hardware. Accordingly, the log information can more surely be acquired in the remote location away from node device.

In the node device, preferably the log processing unit includes: a log-information reading unit configured to read the log information from the log-information storage unit; and an access switching unit configured to prohibit the control unit from accessing the log-information storage unit and to permit the log-information reading unit to access the log-information storage unit when the received data includes the log request command, and configured to permit the control unit to access the log-information storage unit and to prohibit the log-information reading unit from accessing the log-information storage unit when the received data does not include the log request command.

In the node device, when the received data includes the log request command, the access switching unit prohibits the control unit from accessing the log-information storage unit, and permits the log-information reading unit to access the log-information storage unit. Accordingly, not the control unit but the log-information reading unit can access the log-information storage unit to read the log information from the log-information storage unit. On the other hand, when the received data does not include the log request command, the access switching unit permits the control unit to access the log-information storage unit, and prohibits the log-information reading unit from accessing the log-information storage unit. Accordingly, not the log-information reading unit but the control unit can access the log-information storage unit to store the log information in the log-information storage unit (or to read the log information from the log-information storage unit).

In the node device, preferably the log processing unit includes a sending route switching unit, the sending route switching unit interrupts a data route between the control unit and the first sending and receiving unit while establishing a data route between the log-information reading unit and the first sending and receiving unit when the received data includes the log request command, and the sending route switching unit establishes the data route between the control unit and the first sending and receiving unit while interrupting the data route between the log-information reading unit and the first sending and receiving unit when the received data does not include the log request command.

In the node device, when the received data includes the log request command, the sending route switching unit interrupts the data route between the control unit and the first sending and receiving unit, and establishes the data route between the log-information reading unit and the first sending and receiving unit. Accordingly, the log-information reading unit can send the log information read from the log-information storage unit to the outside through the first sending and receiving unit. At this point, because the data route between the control unit and the first sending and receiving unit is interrupted, the control unit can be prevented from having an influence on a flow of the log information sent to the outside from the log-information reading unit through the first sending and receiving unit. On the other hand, when the received data does not include the log request command, the sending route switching unit establishes the data route between the control unit and the first sending and receiving unit, and interrupts the data route between the log-information reading unit and the first sending and receiving unit. Accordingly, the control unit can communicate with the outside through the first sending and receiving unit. At this point, because the data route between the log-information reading unit and the first sending and receiving unit is interrupted, the log processing unit can be prevented from having the influence on the flow of the information that the control unit communicates to the outside through the first sending and receiving unit.

In the node device, preferably the first sending and receiving unit receives or sends the data in a wireless manner.

In the node device, because the first sending and receiving unit receives or sends the data in the wireless manner, for example, the external computer device can communicate with the node device in the wireless manner. This mode is useful in the case that wiring for wired communication is hardly provided in node device.

In the node device, preferably the first sending and receiving unit receives or sends the data in a wired manner.

In the node device, because the first sending and receiving unit receives or sends the data in the wired manner, for example, the external computer device can communicate with the node device in the wired manner. This mode is useful because the communication is conducted with the node device from the outside of the node device irrespective of a radio wave state around the node device.

Preferably the node device further includes a second sending and receiving unit configured to receive the data from the outside of the node device and to send the data to the outside of the node device in addition to the first sending and receiving unit. In the node device, the control unit can communicate with the outside of the node device through the second sending and receiving unit irrespective of the log processing unit.

In the node device, the control unit can communicate with the outside of the node device through the second sending and receiving unit irrespective of the log processing unit. Accordingly, a usage mode of the node device is widely varied. In the usage mode, for example, the node device is communicably connected to a superior computer device on the network through the second sending and receiving unit while communicably connected to an inferior sensor device on the network through the first sending and receiving unit.

In the node device, preferably the log processing unit is constructed only with hardware.

In the node device, the log processing unit is constructed only with the hardware. Accordingly, the possibility of generating the trouble in the log processing unit can be decreased compared with the case that the CPU or the software is used. Accordingly, even if the trouble is generated in the control unit, the log information can be surely acquired in the remote location away from the node device.

In the node device, preferably at least the first sending and receiving unit and the log processing unit are mounted on one common board.

In the node device, because at least the first sending and receiving unit and the log processing unit are mounted on one common board, the number of boards does not increase even if the log processing unit is provided. Accordingly, the node device is compactly constructed.

In accordance with another aspect of the present invention, in a network system, the node device according to any one of claims 1 to 10 and at least one computer device are connected on the network so as to communicate with each other, and the computer device sends data including the log request command to the first sending and receiving unit of the node device through the network, and receives the log information from the first sending and receiving unit of the node device through the network.

In the network system, during the operation, the control unit of the node device performs the processing of producing the log information on the node device to store the log information in the log-information storage unit. For example, when some sort of failure is generated in the node device, the computer device sends the data including the log request command to the first sending and receiving unit of the node device through the network. The log processing unit of the node device receives the data from the computer device through the first sending and receiving unit. The log processing unit performs the processing of reading the log information from the log-information storage unit to cause the first sending and receiving unit to send the log information irrespective of the control unit when the received data includes the log request command expressing the request for the log information. The computer device receives the log information from the first sending and receiving unit of the node device through the network. Accordingly, even if the trouble is generated in the control unit included in the node unit, the computer device can acquire the log information in the remote location away from the node device.

The log processing unit of the node device can be constructed only with the hardware with no use of the CPU or the software because the processing to be performed is limited to the processing related to the log information. A possibility of generating the trouble in the log processing unit can be decreased in the case that the log processing unit is constructed only with the hardware. Accordingly, the log information can surely be acquired in the remote location away from the node device.

### EFFECT OF THE INVENTION

As is clear from the above description, according to the node device of the invention, even if the trouble is generated in the control unit included in the node device, the log information can be acquired in the remote location away from the node device without taking apart the node device.

According to the network system of the invention, the computer device can acquire the log information in the remote location away from the node device even if the trouble is generated in the control unit included in the node device.

### BRIEF DESCRIPTION OF THE DRAWINGS

Fig. 1 is a view illustrating a schematic block configuration of a node device according to an embodiment of the present invention.
Fig. 2 is a view illustrating a specific block configuration of the node device.
Fig. 3 is a view illustrating a configuration of a detecting unit included in the node device.
Fig. 4A is a view illustrating a configuration example of a log request command retaining unit included in the node device.
Fig. 4B is a view illustrating another configuration example of the log request command retaining unit included in the node device.
Fig. 5 is a view illustrating a configuration of a log storage unit interface included in the node device.
Fig. 6 is a view illustrating a block configuration of a node device according to another embodiment of the present invention.
Fig. 7 is a view illustrating a block configuration of a node device according to still another embodiment of the present invention.
Fig. 8 is a view illustrating a configuration of a network system of an embodiment including the node device in Fig. 7.
Fig. 9 is a view illustrating elements related to log processing of a conventional node device.

### MODE FOR CARRYING OUT THE INVENTION

An exemplary embodiment of the present invention will be described below with reference to the drawings.

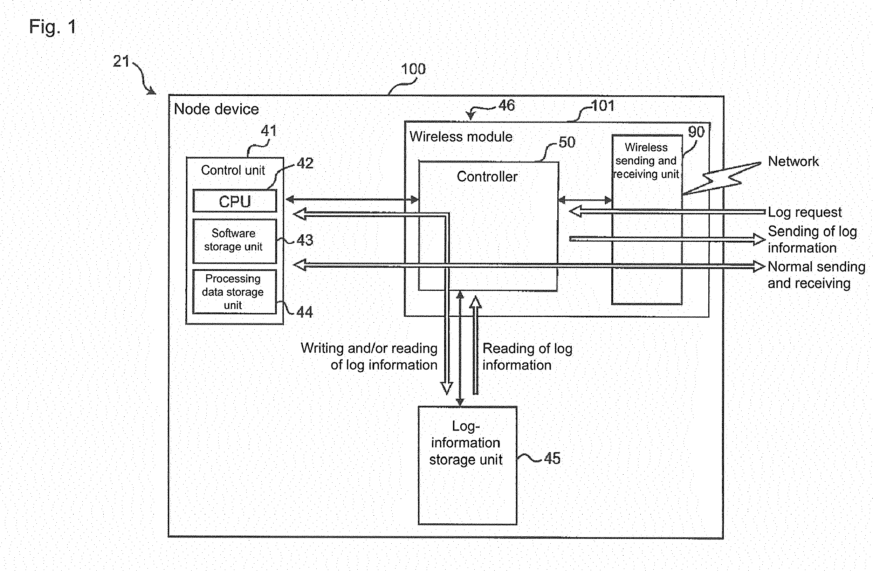

Fig. 1 illustrates a schematic block configuration of a node device (designated by symbol 21) according to an embodiment of the present invention provided on a network.

In casing 100, node device 21 includes control unit 41 that performs various pieces of processing, log-information storage unit 45 in which log information on the node device is stored, and wireless module 46.

Control unit 41 includes CPU (Central Processing Unit) 42, software storage unit 43 in which software for CPU 42 is stored, and processing data storage unit 44 in which data dealt with by CPU 42 is temporarily stored. Using processing data storage unit 44 as a work area, CPU 42 operates according to the software (computer program) stored in software storage unit 43. Therefore, control unit 41 performs various pieces of processing according to a node device application expressed by the software. During the performance of various pieces of processing, control unit 41 produces the log information in which a history such as a processing content and a warning is fully recorded.

Log-information storage unit 45 is constructed with a nonvolatile memory, such as a flash memory and an EEPROM (Electrically Erasable Programmable Read-Only Memory), in which the log information is stored. For example, a storage capacity of log-information storage unit 45 is set to 4k to 8M bytes.

Wireless module 46 includes controller 50 that is of the log processing unit constructed only with hardware and wireless sending and receiving unit 90 that is of the first sending and receiving unit. Controller 50 and wireless sending and receiving unit 90 are compactly mounted on one board 101.

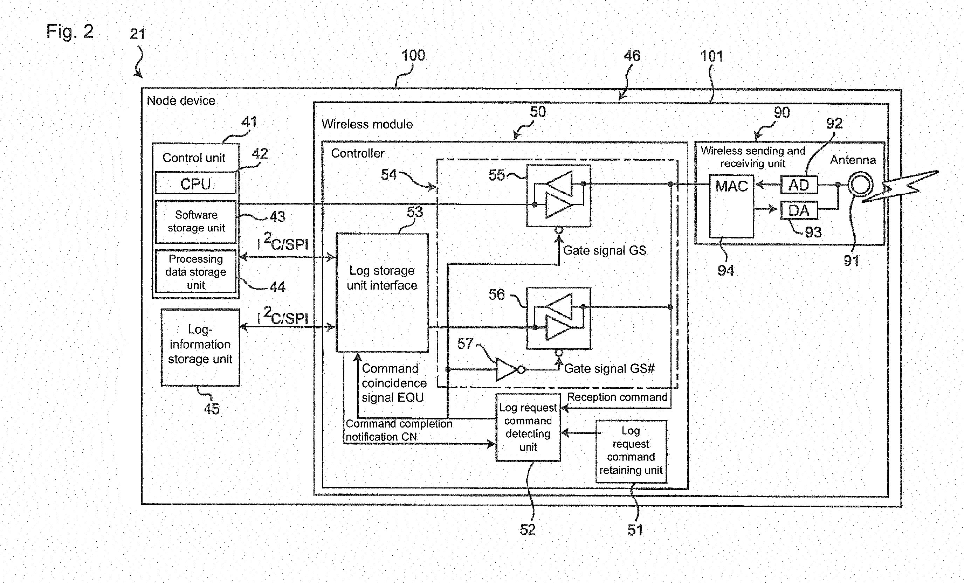

As specifically illustrated in Fig. 2, wireless sending and receiving unit 90 includes antenna 91, AD (Analog to Digital) converting unit 92 that perform AD conversion, DA (Digital to Analog) converting unit 93 that performs DA conversion, and MAC unit 94 that performs processing using a protocol defined by a wireless standard. The AD conversion of data received by antenna 91 is performed by AD converting unit 92, and the received data is subjected to MAC address filtering through MAC unit 94, and sent as a digital signal to controller 50. On the other hand, an MAC address is provided to sending data from controller 50 through MAC unit 94, the DA conversion of the sending data is performed by DA converting unit 93, and the sending data is sent as an analog signal to an outside from antenna 91.

As to the wireless standard, wireless sending and receiving unit 90 may conform to one of IEEE802.11a/b/g/n and IEEE802.15.4. Therefore, wireless sending and receiving unit 90 may have a wireless communication frequency of one of 2.4 GHz and 5 GHz.

Controller 50 includes log request command retaining unit 51, log request command detecting unit 52, log storage unit interface 53, and sending route switching unit 54.

Log request command retaining unit 51 retains data expressing a predetermined log request command (designated by symbol BM).

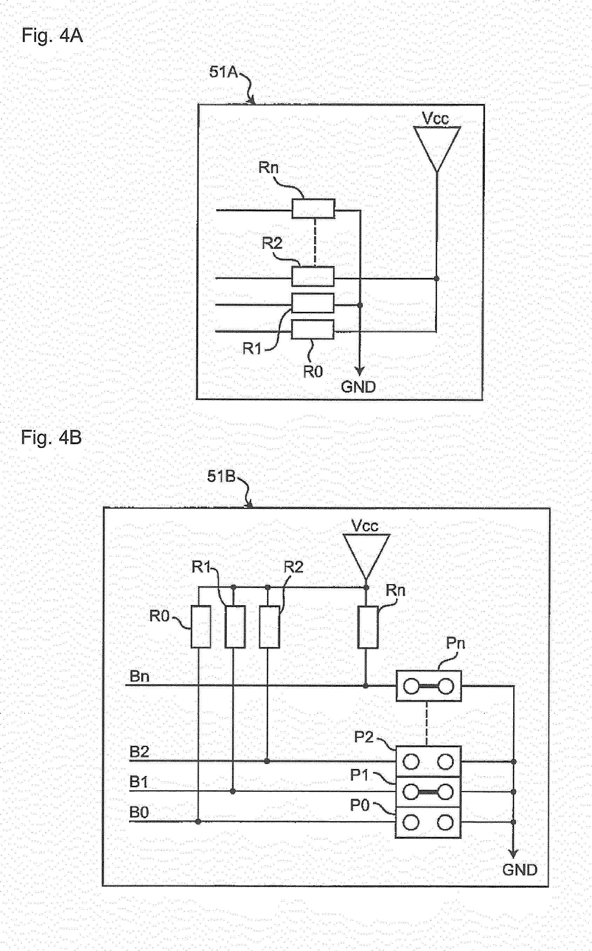

Specifically, as illustrated by configuration example 51A in Fig. 4A, log request command retaining unit 51 is constructed with (n+1) resistive elements R0, R1,..., Rn arrayed in line. One end of each of resistive elements R0, R1, ..., Rn is connected to one of power supply potential Vcc and ground potential GND. Therefore, a high-level or low-level potential emerges at the other end of each of resistive elements R0, R1, ..., Rn. Predetermined log request command BM is expressed by patterns (pieces of parallel data) B0, B1, ..., Bn each of which is formed by a High (H) level or a Low (L) level at the other end of each of the resistive elements R0, R1, ..., Rn. In configuration example 51A, B0 and B2 become the H level, and B1 and Bn become the L level. The H level corresponds to logic of 1 while the L level corresponds to logic of 0.

As illustrated by configuration example 51 B in Fig. 4B, log request command retaining unit 51 may be constructed with (n+1) resistive elements R0, R1, ..., Rn in each of which one end is connected to power supply potential Vcc and (n+1) short-circuit pins P0, P1, ..., Pn each of which is connected between the other end of each of resistive elements R0, R1, ..., Rn and ground potential GND. Predetermined log request command BM is expressed by potentials (pieces of parallel data) B0, B1, ..., Bn at connection points connected between resistive elements R0, R1, ..., Rn and short-circuit pins P0, P1, ..., Pn. In configuration example 51B, because short-circuit pins P0 and P2 are opened while short-circuit pins P1 and Pn are short-circuited, B0 and B2 become the H level while B1 and Bn becomes the L level. A dip-switch can also be used instead of short-circuit pins P0, P1, ..., Pn.

Log request command detecting unit 52 in Fig. 2 compares the data received through wireless sending and receiving unit 90 with data expressing the log request command retained by log request command retaining unit 51, and detects whether the received data includes log request command BM.

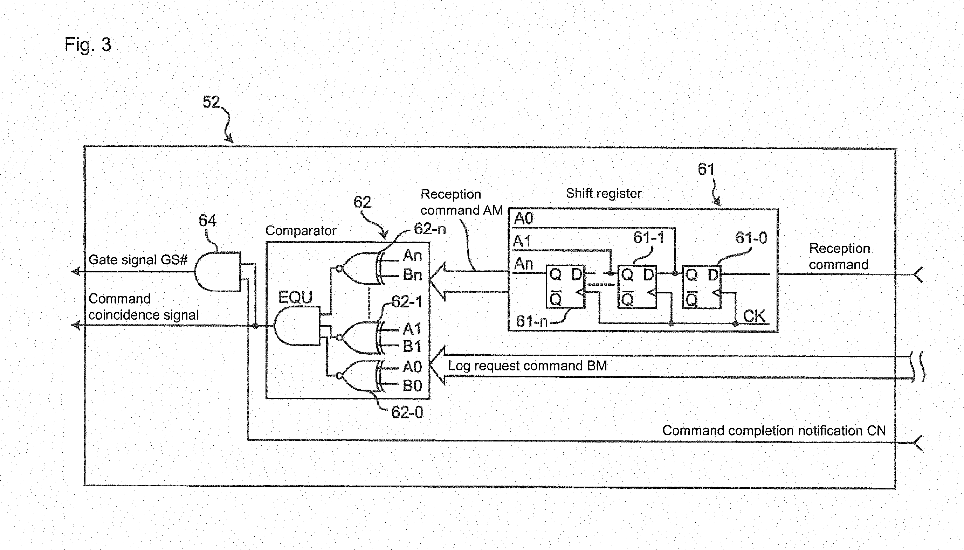

Specifically, as illustrated in Fig. 3, log request command detecting unit 52 includes shift register 61, comparator 62, and AND circuit 64.

Shift register 61 includes (n+1) flip-flops 61-0, 61-1, ..., 61-n connected in series. Each of flip-flops 61-0, 61-1, ..., 61-n receives clock signal CK (generated by a clock generator (not illustrated)) to convert a command (designated by symbol AM) included in the received data into pieces of parallel data A0, A1, ..., An from serial data. Each component of pieces of parallel data A0, A1, ..., An takes one of the H level and the L level.

Comparator (coincidence detecting circuit) 62 includes (n+1) exclusive NOR (XNOR) circuits 61-0, 61-1, ..., 61-n to which corresponding component pairs (A0,B0), (A1,B1), ..., (An,Bn) of reception command AM and log request command BM are input and AND circuit 63 that calculates AND of outputs of XNOR circuits 61-0, 61-1, ..., 61-n. The output (referred to as a "command coincidence signal") EQU of comparator 62 becomes the H level when reception command AM and log request command BM are coincident with each other, and the output becomes the L level when reception command AM and log request command BM are not coincident with each other.

Log request command detecting unit 52 can surely detect whether the received data includes log request command BM using command coincidence signal EQU.

AND circuit 64 calculates a logical product of command coincidence signal EQU and command completion notification CN (becoming the H level during processing of reading the log information and becoming the L level other than that), and outputs the result as gate signal GS. Gate signal GS becomes the H level during a period until the sending of the log information to the outside is completed after log request command detecting unit 52 detects that the received data includes the log request command, and gate signal GS becomes the L level other than that. Gate signal GS is sent to sending route switching unit 54 in Fig. 2.

When command completion notification CN transitions to the L level, shift register 61 is reset in response to the transition to reset command coincidence signal EQU to the L level.

Sending route switching unit 54 in Fig. 2 includes first buffer 55 that is connected between control unit 41 and wireless sending and receiving unit 90, second buffer 56 that is connected between log storage unit interface 53 (more particularly, log-information reading unit 75) and wireless sending and receiving unit 90, and inverter 57. First buffer 55 is controlled by gate signal GS. First buffer 55 is turned off to interrupt a data route between control unit 41 and wireless sending and receiving unit 90 during the period in which gate signal GS is in the H level, and first buffer 55 is turned on to establish the data route between control unit 41 and wireless sending and receiving unit 90 during the period in which gate signal GS is in the L level. Second buffer 56 is controlled by gate signal GS# in which inverter 57 inverts gate signal GS. Second buffer 56 is turned on to establish the data route between log storage unit interface 53 and wireless sending and receiving unit 90 during the period in which gate signal GS# is in the L level (that is, during the period in which gate signal GS is in the H level), and second buffer 56 is turned off to interrupt the data route between log storage unit interface 53 and wireless sending and receiving unit 90 during the period in which gate signal GS# is in the H level (that is, during the period in which gate signal GS is in the L level). In other words, during the period until the sending of the log information to the outside is completed after log request command detecting unit 52 detects that the received data includes the log request command, the data route between log storage unit interface 53 and wireless sending and receiving unit 90 is established while the data route between control unit 41 and wireless sending and receiving unit 90 is interrupted. Other than that, the data route between control unit 41 and wireless sending and receiving unit 90 is established while the data route between log storage unit interface 53 and wireless sending and receiving unit 90 is interrupted.

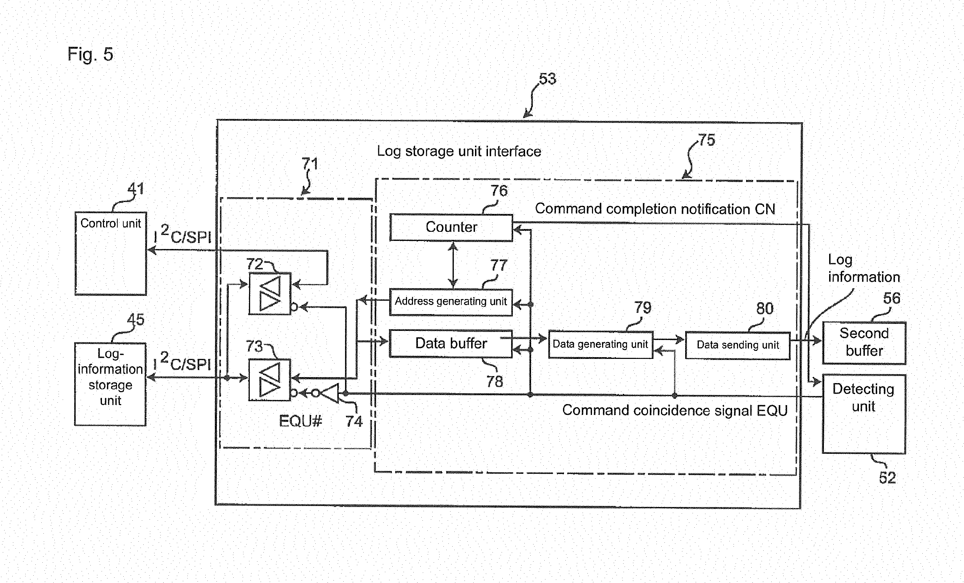

Specifically, as illustrated in Fig. 5, log storage unit interface 53 includes access switching unit 71 that is connected to control unit 41 and log-information storage unit 45 through an I²C or SPI interface and log-information reading unit 75 that is connected to access switching unit 71.

Access switching unit 71 includes third buffer 72 that is connected between control unit 41 and log-information storage unit 45, fourth buffer 73 that is connected between log-information storage unit 45 and log-information reading unit 75, and inverter 74. Third buffer 72 is controlled by command coincidence signal EQU. Third buffer 72 is turned off to prohibit control unit 41 from accessing log-information storage unit 45 during the period in which command coincidence signal EQU is in the H level, and third buffer 72 is turned off to permit control unit 41 to access log-information storage unit 45 during the period in which command coincidence signal EQU is in the L level. Fourth buffer 73 is controlled by signal EQU# in which inverter 74 inverts command coincidence signal EQU. Fourth buffer 73 is turned on to permit log-information reading unit 75 to access log-information storage unit 45 during the period in which signal EQU# is in the L level (that is, during the period in which command coincidence signal EQU is in the H level), and fourth buffer 73 is turned off to prohibit log-information reading unit 75 from accessing log-information storage unit 45 during the period in which signal EQU# is in the H level (that is, during the period in which command coincidence signal EQU is in the L level). In other words, when the received data includes the log request command, access switching unit 71 prohibits control unit 41 from accessing log-information storage unit 45 while permitting log-information reading unit 75 to access log-information storage unit 45. When the received data does not includes the log request command, access switching unit 71 permits control unit 41 to access log-information storage unit 45 while prohibiting log-information reading unit 75 from accessing log-information storage unit 45.

Log-information reading unit 75 includes counter 76, address generating unit 77, data buffer 78, data generating unit 79, and data sending unit 80.

At the time command coincidence signal EQU transition to the H level from the L level, address generating unit 77 starts to sequentially assign addresses from a head address of log-information storage unit 45. In synchronization with the address assignment, data generating unit 79 sequentially reads the pieces of data of the assigned addresses of log-information storage unit 42 to an ending address through data buffer 78. Therefore, the log information stored in log-information storage unit 42 is read. The log information read by data generating unit 79 is sent to second buffer 56 of sending and receiving switching unit 54 through data sending unit 80.

At the time command coincidence signal EQU transitions to the H level from the L level, counter 76 causes command completion notification CN to transition to the H level expressing that the performance of the log request command is incomplete. Counter 76 counts the number of addresses assigned by address generating unit 77 at the same time as data generating unit 79 reads the data. When the assignment is completed up to the ending address (or a predetermined address) of log-information storage unit 42, counter 76 causes command completion notification CN to transition to the L level expressing that the performance of the log request command is completed. Command completion notification CN is set to detecting unit 52.

As described above, during the period in which command coincidence signal EQU is in the H level, log storage unit interface 53 accesses log-information storage unit 45 to read the log information stored in log-information storage unit 45, and sends the read log information to second buffer 56 of sending and receiving switching unit 54. On the other hand, during the period in which command coincidence signal EQU is in the L level, log storage unit interface 53 permits control unit 41 to access log-information storage unit 45.

In the embodiment, controller 50 is constructed by a CPLD (Complex Programmable Logic Device) that is a kind of integrated circuit.

Whole operation of node device 21 will be described with reference to Figs. 2 and 5.

In node device 21, log request command detecting unit 52 compares the data received through wireless sending and receiving unit 90 with the data expressing log request command BM retained by log request command retaining unit 51, and detects whether the received data includes log request command BM.

When the received data does not include log request command BM, control unit 41 performs normal operation, namely, various pieces of processing according to an application of the node device. During the performance of various pieces of processing, control unit 41 produces the log information in which a history such as a processing content and a warning is fully recorded. When the received data does not include log request command BM (specifically, during the period in which command coincidence signal EQU is in the L level), log storage unit interface 53 (specifically, access switching unit 71 in Fig. 5) permits control unit 41 to access log-information storage unit 45 while prohibiting log-information reading unit 75 from accessing log-information storage unit 45. Accordingly, not log-information reading unit 75 but control unit 41 can access log-information storage unit 45 to store the log information in log-information storage unit 45 (or to read the log information from log-information storage unit 45). When the received data does not include log request command BM (specifically, during the period in which gate signal GS is in the H level), sending route switching unit 54 establishes the data route between control unit 41 and wireless sending and receiving unit 90 while interrupting the data route between log storage unit interface 53 and wireless sending and receiving unit 90. Accordingly, control unit 41 can communicate with the outside of node device 21, for example, a computer device on the network, through wireless sending and receiving unit 90. At this point, because the data route between log-information reading unit 75 and wireless sending and receiving unit 90 is interrupted, controller 50 can be prevented from having an influence on a flow of the information that control unit 41 communicates to the outside through wireless sending and receiving unit 90.

It is assumed that, when some sort of failure is generated in node device 21, controller 50 receives the data including log request command BM through wireless sending and receiving unit 90 from the outside of node device 21, for example, the computer device in a remote location. In such cases, the log request command detecting unit 52 detects that the received data includes log request command BM.

When the received data includes log request command BM (specifically, during the period in which command coincidence signal EQU is in the L level), log storage unit interface 53 (specifically, access switching unit 71 in Fig. 5) prohibits control unit 41 from accessing log-information storage unit 45 while permitting log storage unit interface 53 (specifically, log-information reading unit 75 in Fig. 5) to access log-information storage unit 45. Accordingly, not control unit 41 but log-information reading unit 75 can access log-information storage unit 45 to read the log information from log-information storage unit 45. When the received data includes log request command BM (specifically, during the period in which gate signal GS is in the H level), sending route switching unit 54 in Fig. 2 interrupts the data route between control unit 41 and wireless sending and receiving unit 90 while establishing the data route between log storage unit interface 53 (specifically, log-information reading unit 75 in Fig. 5) and wireless sending and receiving unit 90. Accordingly, the log information read from log-information storage unit 45 by log-information reading unit 75 can be sent to the outside through wireless sending and receiving unit 90. At this point, because the data route between control unit 41 and wireless sending and receiving unit 90 is interrupted, control unit 41 can be prevented from having the influence on the flow of the log information sent to the outside from log-information reading unit 75 through wireless sending and receiving unit 90.

As described above, in node device 21, when the received data includes log request command BM, controller 50 performs the processing of reading the log information from log-information storage unit 45 to cause wireless sending and receiving unit 90 to send the log information irrespective of control unit 41. Accordingly, even if a trouble is generated in control unit 41, the log information can be acquired in the remote location away from node device 21 without taking apart node device 21.

For example, when some sort of failure is generated in node device 21, the computer device in the remote location away from node device 21 sends the data including log request command BM to wireless sending and receiving unit 90 of node device 21 through the network. Controller 50 of node device 21 receives the data from the computer device through wireless sending and receiving unit 90. When the received data includes log request command BM, controller 50 performs the processing of reading the log information from log-information storage unit 45 to cause wireless sending and receiving unit 90 to send the log information irrespective of control unit 41. The computer device receives the log information from wireless sending and receiving unit 90 of node device 21 through the network. Accordingly, even if the trouble is generated in control unit 41 included in node device 21, the computer device can acquire the log information in the remote location away from node device 21.

Controller 50 of node device 21 can be constructed only with the hardware with no use of the CPU or the software because the processing to be performed is limited to the processing related to the log information. Specifically, in the embodiment, log request command retaining unit 51, log request command detecting unit 52, and sending route switching unit 54, which constitute controller 50, are constructed with a relatively simple electronic circuit. Log storage unit interface 53 is constructed with a CPLD (Complex Programmable Logic Device) that is a kind of integrated circuit. In the commercially available CPLD, a user (in the embodiment, a person who produces the node device) can define and change an internal logic circuit after purchase. Accordingly, log storage unit interface 53 can be constructed using the CPLD. As a result, the whole of controller 50 can be constructed only with the hardware. In the case that controller 50 is constructed only with the hardware, a possibility of generating the trouble in controller 50 can be decreased compared with the case that controller 50 is constructed using the CPU or the software. Accordingly, the log information can surely be acquired in the remote location away from node device 21.

Controller 50 of node device 21 can also be constructed with the CPU operated by the software.

In node device 21, because wireless sending and receiving unit 90 and controller 50 are mounted on one common board 101 (thereby constituting wireless module 46), the number of boards does not increase even if controller 50 is provided. Accordingly, node device 21 is compactly constructed. Control unit 41 and log-information storage unit 45 may further be mounted on board 101. Therefore, node device 21 is more compactly constructed.

In node device 21, because wireless sending and receiving unit 90 sends or receives the data in a wireless manner, for example, the external computer device can communicate with node device 21 in the wireless manner. This mode is useful in the case that wiring for wired communication is hardly provided in node device 21.

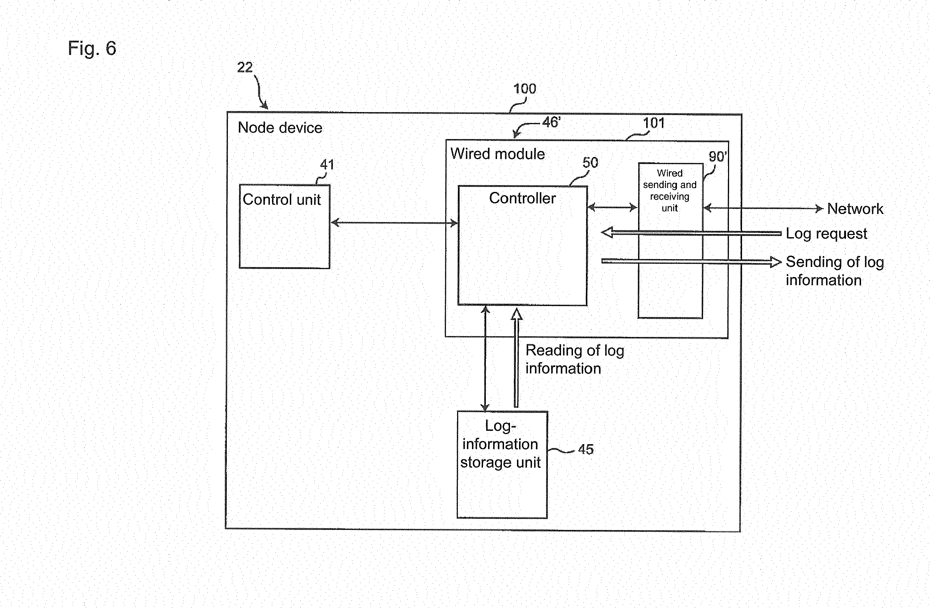

On the other hand, in node device 22 according to another embodiment in Fig. 6, wired sending and receiving unit 90' that receives or sends the data in the wired manner may be provided instead of wireless sending and receiving unit 90. In node device 22, wired sending and receiving unit 90' and controller 50 constitute wired module 46' while being mounted on one common board 101. Because wired sending and receiving unit 90' receives or sends the data in the wired manner, for example, the external computer device can communicate with node device 22 in the wired manner. This mode is useful because the communication can be conducted with node device 22 from the outside of node device 22 irrespective of a radio wave state around node device 22.

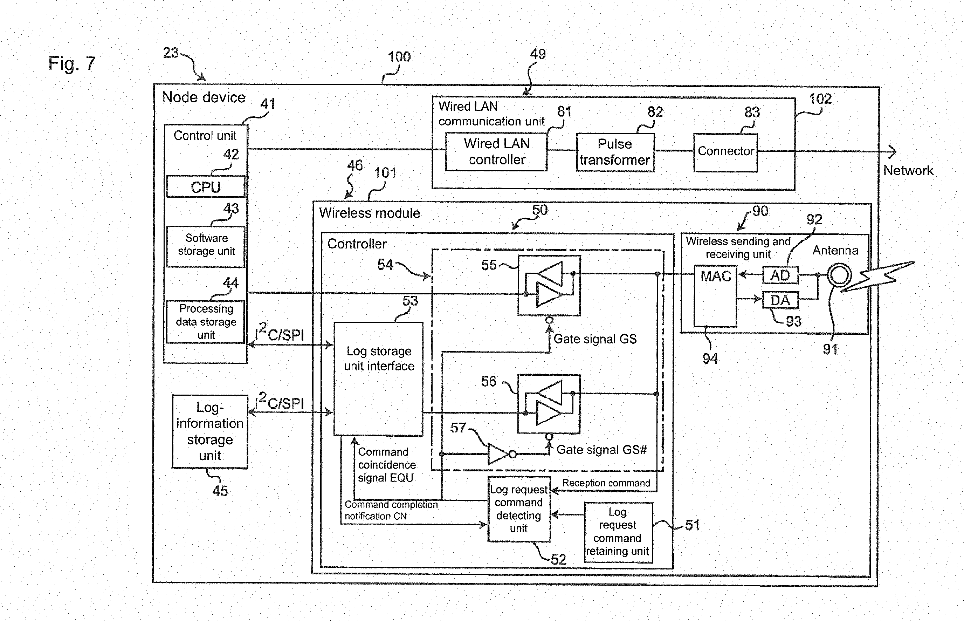

Fig. 7 illustrates a block configuration of node device 23 according to still another embodiment. In Fig. 7, the same component as that in Fig. 2 is designated by the same symbol. Therefore, the overlap description is omitted.

In casing 100, node device 23 includes wired LAN communication unit 49 that is of the second sending and receiving unit in addition to wireless module 46 (that is, wireless sending unit 90 that is of the first sending and receiving unit).

In the embodiment, wired LAN communication unit 49 includes wired LAN controller 81 that is mounted on board 102, pulse transformer 82 that transmits a pulse-waveform signal, and RJ45 connector 83 that connects a LAN cable to the outside. Wired LAN controller 81 performs processing related to the communication through the Internet that is of the network according to a TCP/IP (Transmission Control Protocol/Internet Protocol).

Irrespective of controller 50, control unit 41 can communicate with the outside of node device 23, for example, the computer device in the remote location through wired LAN communication unit 49.

Board 102 for wired LAN communication unit 49 may be in common with the board on which control unit 41 and log-information storage unit 45 are mounted. Board 102 may be in common with board 101 for wireless module 46. Therefore, node device 21 is compactly constructed.

A usage mode of node device 23 is widely varied compared with node devices 21 and 22. In a usage mode, for example, node device 23 is communicably connected to a superior computer device on the network through wired LAN communication unit 49 while communicably connected to an inferior sensor device on the network through wireless sending unit 90.

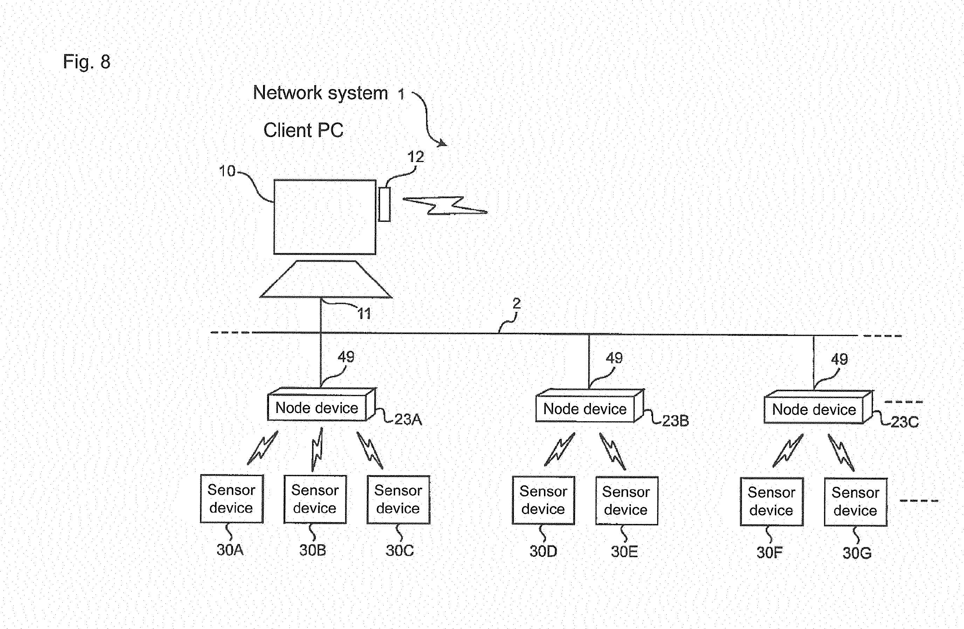

For example, Fig. 8 illustrates a configuration of a network system 1 according to an embodiment as the usage mode. Network system 1 includes plural node devices 23 (that are distinguished from one another by symbols 23A, 23B, 23C, ...).

Network system 1 includes one client PC (Personal Computer) 10 that is of the superior computer device, plural node devices 23A, 23B, 23C, ..., and plural inferior sensor devices 30A, 30B, 30C, 30D, 30E, 30F, 30G, ....

Client PC 10 includes wired LAN communication unit 11 that conducts wired communication according to the TCP/IP (Transmission Control Protocol/Internet Protocol) and wireless LAN communication unit 12 that conducts wireless communication by Wi-Fi (registered trademark). Using wired LAN communication units 11 and 49, client PC 10 is connected to plural node devices 23A, 23B, 23C, ... so as to be able to conduct the wired communication with node devices 23A, 23B, 23C, ... through LAN 2 that is of the network.

Plural sensor devices 30A, 30B, 30C, 30D, 30E, 30F, 30G, ... are connected to node devices 23A, 23B, 23C, ... so as to be able to conduct the wireless communication with node devices 23A, 23B, 23C, ... by Wi-Fi (registered trademark), respectively.

Sensor devices 30A, 30B, 30C, 30D, 30E, 30F, 30G, ... detect pieces of sensor data such as temperature, humidity, illuminance, a flow rate, acceleration, and pressure according to the application of each sensor device.

In this usage mode, the pieces of sensor data acquired by sensor devices 30A, 30B, 30C, 30D, 30E, 30F, 30G,... are sent to corresponding node devices 23A, 23B, 23C, ... and temporarily retained by node devices 23A, 23B, 23C, ..., and then the pieces of sensor data are sent to client PC 10 from node devices 23A, 23B, 23C, ....

At this point, for example, when some sort of failure is generated in node device 23A, client PC 10 sends log request command BM to node device 23A by wired communication through LAN 2. In node device 23A, irrespective of controller 50 (see Fig. 7), log request command BM is transmitted to control unit 41 through wired LAN communication unit 49. When control unit 41 of node device 23A operates normally, control unit 41 reads the log information from log-information storage unit 45, and sends the log information to the outside through wired LAN communication unit 49 irrespective of controller 50. Accordingly, client PC 10 in Fig. 8 can acquire the log information.

On the other hand, when the failure is generated in control unit 41 of node device 23A while the trouble is generated in node device 23A, client PC 10 cannot acquire the log information by wired communication through LAN 2. At this point, client PC 10 sends log request command BM to node device 23A by wireless communication using wireless LAN communication unit 12. In node device 23A, when the received data includes log request command BM, controller 50 (see Fig. 7) performs the processing of reading the log information from log-information storage unit 45 to cause wireless sending unit 90 to send the log information irrespective of control unit 41. Accordingly, client PC 10 in Fig. 8 can acquire the log information in the remote location away from node device 23A by wireless communication using wireless LAN communication unit 12.

In the embodiment, client PC 10 sends log request command BM to acquire the log information. Alternatively, like the conventional maintenance base computer, another computer device may send log request command BM to node device 23A in which the trouble is generated to acquire the log information by wireless communication.

In the usage mode, by way of example, node device 23 is communicably connected to the superior computer device on the network through wired LAN communication unit 49 while communicably connected to the inferior sensor device on the network through wireless sending unit 90. Using node device 21 (see Figs. 1 and 2) instead of node device 23, the communication may be conducted with the outside only through wireless sending and receiving unit 90.

In this case, it is assumed that the period in which node device 21 communicates with client PC 10 does not overlap the period in which node device 21 communicates with sensor devices 30A, 30B, ....

For example, it is assumed that, when node device 21 makes a request to a certain sensor device, the wireless communication between node device 21 and sensor devices 30A, 30B, ... is permitted to send the data to node device 21 from the sensor device. When the acquisition of the sensor data from the sensor device is completed, node device 21 interrupts the wireless communication. Therefore, node device 21 can control the communication period to avoid the overlap between the period in which node device 21 communicates with client PC 10 and the period in which node device 21 communicates with sensor devices 30A, 30B, ....

In the wireless communication between node device 21 and sensor devices 30A, 30B, ..., it is assumed that the sensor data is periodically sent to corresponding node device 21 from each sensor device only in a certain period, and it is assumed that node device 21 sends back a reception completion signal (called ACK) to the sensor device every time the reception of the sensor data is completed. It is assumed that node device 21 does not send back reception completion signal ACK during the period in which node device 21 communicates with client PC 10, and it is assumed that the sensor device sends the sensor data again after a certain period elapses. Therefore, the overlap between the period in which node device 21 communicates with client PC 10 and the period in which node device 21 communicates with sensor devices 30A, 30B, ... can be avoided.

In the embodiments, network system 1 includes one client PC 10 that is of the computer device. Alternatively, network system 1 may include plural client devices or various computers, such as a server device and a host computer, which can conduct communication through the network.

### DESCRIPTION OF SYMBOLS

- 1: network system
- 21,22,23: node device
- 41: control unit
- 45: log-information storage unit
- 50: controller
- 51: log request command retaining unit
- 52: log request command detecting unit
- 53: log storage unit interface
- 54: sending and receiving route switching unit
- 71: access switching unit
- 72: log-information reading unit
- 90: wireless sending and receiving unit
- 90': wired sending and receiving unit

## Claims

1. A node device provided on a network, the node device comprising:
a log-information storage unit in which log information on the node device is stored;
a control unit configured to perform processing of producing the log information during operation to store the log information in the log-information storage unit;
a first sending and receiving unit configured to receive data from an outside of the node device and to send data to the outside of the node device; and
a log processing unit configured to receive the data from the outside of the node device through the first sending and receiving unit and to perform processing of reading the log information from the log-information storage unit to cause the first sending and receiving unit to send the log information irrespective of the control unit when the received data comprises a log request command expressing a request for the log information.

2. The node device according to claim 1, wherein the log processing unit permits the control unit to perform processing of communicating with the outside through the first sending and receiving unit when the received data does not comprise the log request command.

3. The node device according to claim 1 or 2, wherein the log processing unit comprises:
a log request command retaining unit configured to retain data expressing a predetermined log request command; and
a log request command detecting unit configured to detect whether the data received through the first sending and receiving unit comprises the log request command by comparing the received data with data expressing the log request command retained by the log request command retaining unit.

4. The node device according to any one of claims 1 to 3, wherein the log processing unit comprises:
a log-information reading unit configured to read the log information from the log-information storage unit; and
an access switching unit configured to prohibit the control unit from accessing the log-information storage unit and to permit the log-information reading unit to access the log-information storage unit when the received data comprises the log request command, and configured to permit the control unit to access the log-information storage unit and to prohibit the log-information reading unit from accessing the log-information storage unit when the received data does not comprise the log request command.

5. The node device according to claim 4, wherein the log processing unit comprises a sending route switching unit,
the sending route switching unit interrupts a data route between the control unit and the first sending and receiving unit while establishing a data route between the log-information reading unit and the first sending and receiving unit when the received data comprises the log request command, and the sending route switching unit establishes the data route between the control unit and the first sending and receiving unit while interrupting the data route between the log-information reading unit and the first sending and receiving unit when the received data does not comprise the log request command.

6. The node device according to any one of claims 1 to 5, wherein the first sending and receiving unit receives or sends the data in a wireless manner.

7. The node device according to any one of claims 1 to 5, wherein the first sending and receiving unit receives or sends the data in a wired manner.

8. The node device according to any one of claims 1 to 7, further comprising a second sending and receiving unit configured to receive the data from the outside of the node device and to send the data to the outside of the node device in addition to the first sending and receiving unit,
wherein the control unit can communicate with the outside of the node device through the second sending and receiving unit irrespective of the log processing unit.

9. The node device according to any one of claims 1 to 8, wherein the log processing unit is constructed only with hardware.

10. The node device according to any one of claims 1 to 9, wherein at least the first sending and receiving unit and the log processing unit are mounted on one common board.

11. A network system, wherein the node device according to any one of claims 1 to 10 and at least one computer device are connected on the network so as to communicate with each other, and
the computer device sends data comprising the log request command to the first sending and receiving unit of the node device through the network, and receives the log information from the first sending and receiving unit of the node device through the network.
